# EUROPÄISCHE PATENTSCHRIFT

(11) **EP 3 632 697 B1**
(45) Veröffentlichungstag und Bekanntmachung des Hinweises auf die Patenterteilung: **28.04.2021**
(21) Anmeldenummer: 19200362.2
(22) Anmeldetag: 30.09.2019
(51) Int. Cl.: B42D 25/24, B42D 25/47, B42C 9/00, B42C 19/08

(54) **VORRICHTUNG UND VERFAHREN ZUM ABLÖSEN EINER DECKSCHICHT VON EINER AN EINEM EINBAND ANGEBRACHTEN MEHRSCHICHTIGEN LAGE**
DEVICE AND METHOD FOR REMOVING A COVERING LAYER FROM A MULTILAYER LAYER APPLIED TO A SINGLE STRIP
DISPOSITIF ET PROCÉDÉ DE DÉTACHEMENT D'UNE COUCHE DE REVÊTEMENT D'UNE FEUILLE MULTICOUCHE APPLIQUÉE À UNE COUVERTURE

(30) Priorität: 01.10.2018 DE 102018124273
(43) Veröffentlichungstag der Anmeldung: 08.04.2020
(73) Patentinhaber: Bundesdruckerei GmbH, 10969 Berlin (DE)
(72) Erfinder: Frost, Dietmar, 31785 Hameln (DE); Gümmer, Andreas, 27308 Hohenaverbergen (DE); Hannebohm, Hans-Heinrich, 31849 Hessisch Oldendorf (DE); Schulz, Henrik, 30177 Hannover (DE)
(74) Vertreter: Hentrich Patentanwälte PartG mbB

(56) Entgegenhaltungen:
- EP-A1- 0 562 619

## Beschreibung

Die Erfindung betrifft eine Vorrichtung zum Ablösen einer Deckschicht von einer an einem Einband eines Ausweis-, Wert- oder Sicherheitsdokuments angebrachten mehrschichtigen Lage.

Buchförmige Ausweis-, Wert- oder Sicherheitsdokumente, beispielsweise Reisepässe, umfassen einen Einband und einen Passbuchblock. Der Einband und der Passbuchblock sind miteinander verklebt und gefaltet. Dazu wird der Einband zunächst mit einer Klebstoffschicht versehen, die mit einer Deckschicht, nämlich einem Liner, eine mehrschichtige Lage bildet. Der Liner wird von Hand von der Klebstoffschicht getrennt, was sich als sehr zeitaufwendig und kostenintensiv herausgestellt hat.

In der EP 0 562 619 A1 ist ein Delaminationssystem gemäß dem Oberbegriff des Anspruchs 1 beschrieben, bei dem ein mehrschichtiger Verbund durch einen Spalt zwischen zwei Walzen hindurchgeführt wird. Die Walzen weisen eine radial ausgerichtete Perforation aus, wobei an den Löchern ein Unterdruck angelegt ist, um den Schichtverbund in zwei einzelne Schichten zu zertrennen. Dabei sind in die Walzen Bleche integriert, so dass der Unterdruck nur unter vorgegebenen Winkelstellungen der Walzen an den Löchern der Perforation des Walzenmantels anliegt.

Es ist daher die Aufgabe der vorliegenden Erfindung, eine verbesserte Vorrichtung und ein verbessertes Verfahren zum Ablösen einer Deckschicht von einer an einem Einband eines Ausweis-, Wert- oder Sicherheitsdokuments angebrachten mehrschichtigen Lage anzugeben, die zugleich den vorstehend genannten Nachteilen Rechnung tragen.

Der die Vorrichtung betreffende Teil der Aufgabe wird durch eine Vorrichtung mit dem Merkmalsbestand des Anspruchs 1 gelöst. Diese Vorrichtung umfasst insbesondere eine motorisch kontinuierlich oder getaktet angetriebene erste Walze zur Förderung des Einbands und eine bezüglich der ersten Walze derart ausgerichtete zweite Walze, dass der Einband in einem zumindest zeitweise zwischen den beiden Walzen ausgebildeten Spalt hindurchtreten kann. An der ersten Walze ist eine radial bezüglich ihrer Walzenlängsachse ausgebildete erste Saugeinrichtung angeordnet oder ausgebildet, welche mit einer Unterdruckeinrichtung strömungsverbunden und derart ausgestaltet ist, um den Einband zumindest teilweise an der ersten Walze zu fixieren. An der zweiten Walze ist eine radial bezüglich ihrer Walzenlängsachse orientierte zweite Saugeinrichtung angeordnet oder ausgebildet, die mit der Unterdruckeinrichtung oder mit einer zweiten Unterdruckeinrichtung strömungsverbunden und derart ausgestaltet ist, um beim Kontaktieren der Deckschicht diese von der mehrschichtigen Lage vom Einband abzulösen.

Durch die an der ersten Walze angeordnete erste Saugeinrichtung wird also der Transport des Einbands bewirkt, wobei mittels der an der zweiten Walze angeordneten zweiten Saugeinrichtung das Ablösen der Deckschicht von der Klebstoffschicht der mehrschichtigen Lage erfolgt. Ein manuelles Trennen des Liners von der Klebstoffschicht ist somit nicht mehr nötig.

Es hat sich als vorteilhaft erwiesen, wenn die erste Saugeinrichtung aus einer Mehrzahl von ersten Sauggreifern gebildet ist, die, insbesondere gleichmäßig, über einen Mantel der ersten Walze verteilt angeordnet sind. Damit ist gewährleistet, dass der Einband mit der mehrschichtigen Lage sicher an der ersten Walze fixiert wird. Alternativ oder ergänzend hat es sich als sinnvoll erwiesen, wenn die zweite Saugeinrichtung aus einer Mehrzahl von zweiten Sauggreifern gebildet ist, die, insbesondere gleichmäßig, über einen Mantel der zweiten Walze verteilt angeordnet sind. Auch hierdurch lässt sich die Deckschicht betriebssicher von der Klebstoffschicht trennen.

Ferner ist es vorteilhaft, wenn die Mehrzahl von ersten Sauggreifern in einer oder in mehreren parallel zur Walzenlängsachse orientierten, insbesondere gleichmäßig verteilten, Reihen angeordnet sind. Durch die Reihenanordnung lassen sich Ungenauigkeiten beim Zuführen des Einbands an die erste Walze ausgleichen. Entsprechend verhält es sich, wenn alternativ oder ergänzend die Mehrzahl von zweiten Sauggreifern ebenfalls in einer oder in mehreren parallel zur Walzenlängsachse orientierten, insbesondere gleichmäßig verteilten, Reihen angeordnet sind.

Es hat sich ferner als vorteilhaft erwiesen, wenn die Mehrzahl der ersten Sauggreifer und/oder die Mehrzahl der zweiten Sauggreifer mindestens einen zentral oder zumindest nahe der Walzenmitte angeordneten Mittelsauggreifer umfasst, der über den Umfang der Walzen hervorsteht. Damit steht der eine oder stehen mehrere Mittelsauggreifer also gegenüber weiter außen an der Walze angeordneten Sauggreifern radial hervor, womit der Einband oder die Passbuchdecke beim Aufnehmen gebogen wird und dadurch vereinzelt aus einem Magazin entnommen werden kann.

Erfindungsgemäß umfasst der eine oder mehrere Sauggreifer einen axial komprimierbaren Balg, der derart ausgestaltet ist, einen radial bezüglich der Walzenlängsachse orientierten Hub auszuführen. Dieser Balg wird beim Ansaugen oder Aktivstellen der Saugeinrichtung gegen eine Rückstellkraft komprimiert. Sobald die Saugkraft aufhört oder nachlässt, d.h. wenn die Saugeinrichtung inaktiv gestellt wird, expandiert der Balg wieder, womit dieser als eine Art "Auswerfer" zum Lösen des deckschichtfreien Einbands oder zum Lösen der Deckschicht von der betreffenden Walze agiert.

In diesem Zusammenhang hat es sich als sinnvoll erwiesen, wenn die erste Saugeinrichtung und/oder die zweite Saugeinrichtung über einen Winkelbereich von zwischen 60 Grad und 180 Grad, vorzugsweise zwischen 90 Grad und 120 Grad wirksam ist, und wenn der Winkelbereich auf einer Seite der Walze ausgebildet ist, die der ihr gegenüberliegenden Walze zugewandt ist. Somit wird also der Einband und/oder die Deckschicht nur bereichsweise an der Walze fixiert, so dass sich diese in einem anderen Bereich auf einfache Weise ablösen lassen.

Eine besonders kompakte Bauweise lässt sich dadurch erzielen, dass die erste Saugeinrichtung und/oder die zweite Saugeinrichtung mindestens einen in einer Walzenwand der Walze ausgebildeten Durchtritt umfasst, welcher mit einem im Inneren der Walze ausgebildeten Saugvolumen zumindest zeitweise strömungsverbunden ist, welches mit der Unterdruckeinrichtung und/oder mit der zweiten Unterdruckeinrichtung strömungsverbunden ist. Damit wird also ein Vakuum im Inneren der Walze erzeugt, das sich über den in der Walzenwand ausgebildeten Durchtritt auf den Einband bzw. auf die Deckschicht auswirkt.

Um die erste Saugeinrichtung und/oder die zweite Saugeinrichtung bereichsweise und selektiv betreiben zu können, hat es sich als sinnvoll erwiesen, wenn im Inneren der Walze ein Steuerelement angeordnet ist, das den einen Durchtritt oder mehrere der Durchtritte blockiert, wenn die Walze unter einer vorgegebenen Winkelstellung oder innerhalb eines vorgegebenen Bereichs von Winkelstellungen angeordnet ist.

Die Vorrichtung lässt sich zudem mit einem geringeren Bauraum oder kompakter gestalten, wenn eine Antriebseinrichtung vorhanden ist, die ausgestaltet ist, die erste Walze kontinuierlich oder getaktet in einer Drehrichtung anzutreiben, und die ausgestaltet ist, zugleich die zweite Walze kontinuierlich oder getaktet in einer der Drehrichtung entgegengesetzten Rotationsrichtung anzutreiben. Die Antriebseinrichtung kann dabei also über eine Kupplungseinheit verfügen, die in besonders einfacher Ausgestaltung mittels zweier ineinandergreifender Zahnräder gebildet ist, wovon das eine Zahnrad ausgestaltet ist, die erste Walze in der Drehrichtung anzutreiben und das andere Zahnrad ausgebildet ist, die zweite Walze in der entgegengesetzten Rotationsrichtung anzutreiben.

Eine betriebssichere Handhabung des Einbands lässt sich dadurch realisieren, dass an der ersten Walze mindestens ein um eine erste Umlenkwalze geführtes Transportband für den Transport des Einbands mit und ohne die Deckschicht angeordnet ist. Das der ersten Walze zugeordnete Transportband ist als ein Endlosband gebildet, wobei dessen (oberes) Transporttrum für den Transport des Einbands ohne Deckschicht und dessen (unteres) Leertrum zumindest teilweise für den Transport des Einbands mit Deckschicht vorgesehen sind.

Dementsprechend hat es sich auch als vorteilhaft erwiesen, wenn an der zweiten Walze mindestens ein um eine zweite Umlenkwalze geführtes Transportband für den Abtransport der abgelösten Deckschicht angeordnet ist. Das (obere) Transporttrum des der zweiten Walze zugeordneten Transportbandes dient dem Abtransport der abgelösten Deckschicht, die mit anderen in einem Sammelbehälter gesammelt werden kann. Das (untere) Leertrum bleibt dabei weitestgehend frei.

Um einen erhöhten Automatisierungsgrad erzielen zu können, hat es sich als vorteilhaft erwiesen, wenn der ersten Walze ein Zuführmagazin zugeordnet ist zur Zuführung der Einbände, an denen die die Deckschicht umfassende mehrschichtige Lage angebracht ist, und wenn das Zuführmagazin eine Fördereinrichtung für den Transport der Einbände zu der ersten Walze umfasst. Alternativ ist es auch möglich, dass die Fördereinrichtung die Einbände an das Leertrum des Transportbandes führt, wo diese mitgenommen werden bevor sie an der ersten Walze fixiert werden.

In diesem Zusammenhang hat es sich ebenfalls als sinnvoll erwiesen, wenn ein Sammelmagazin vorhanden ist, das ausgestaltet ist, die deckschichtfreien Einbände für die Weiterverarbeitung zu stapeln und/oder zu sammeln. Damit kann also eine chargenweise Fertigung erzielt werden, wobei das Sammelmagazin zugleich als Pufferlager für den weiteren Produktionsprozess dienen kann.

Der das Verfahren betreffende Teil der Aufgabe wird durch ein Verfahren mit dem Merkmalsbestand des Anspruchs 12 gelöst. Das Verfahren zur Ablösung einer Deckschicht einer mehrschichtigen Lage, die auf einem Einband eines Ausweis-, Wert- oder Sicherheitsdokuments angebracht ist, umfasst insbesondere die Schritte:
- Zuführen des Einbands an eine erste Walze,
- zumindest teilweises Fixieren einer der Deckschicht abgewandten Außenseite des Einbands an der ersten Walze mittels einer radial bezüglich einer Walzenlängsachse orientierten ersten Saugeinrichtung, die an der ersten Walze angeordnet oder ausgebildet ist,
- kontinuierliches oder getaktetes Antreiben der ersten Walze um ihre Walzenlängsachse, zumindest so weit, bis der Einband in einen zwischen der ersten Walze und einer zweiten Walze zumindest zeitweise vorhandenen Spalt transportiert wird,
- Kontaktieren und zumindest teilweises Fixieren der Deckschicht an der zweiten Walze mittels einer radial bezüglich einer Walzenlängsachse orientierten zweiten Saugeinrichtung, die an der zweiten Walze angeordnet oder ausgebildet ist, und
- Ablösen der an der zweiten Saugeinrichtung zumindest teilweise fixierten Deckschicht von der mehrschichtigen Lage durch ein weiteres kontinuierliches oder getaktetes Antreiben der ersten Walze um ihre Walzenlängsachse.

Auch durch dieses Verfahren ist die Möglichkeit eröffnet, dass das Ablösen des Liners von der Klebstoffschicht automatisiert erfolgen kann und ein manuelles Ablösen der Deckschicht nicht erforderlich ist.

Es hat sich weiterhin als vorteilhaft erwiesen, wenn die erste Walze mittels einer Antriebseinrichtung kontinuierlich oder getaktet in einer Drehrichtung angetrieben wird, und wenn die zweite Walze zugleich kontinuierlich oder getaktet mittels der Antriebseinrichtung in einer der Drehrichtung entgegengesetzten Rotationsrichtung angetrieben wird. Durch die gegenläufig drehenden Walzen lässt sich ein besonders betriebssicherer Ablösvorgang zum Ablösen der Deckschicht erreichen. Außerdem wird der Einband dabei so stark an der ersten Walze fixiert, dass dieser gebogen wird und somit eine Vorspannung auf die Deckschicht ausgeübt ist, wodurch sich diese mittels der Saugeinrichtung der zweiten Walze auf einfachere Weise lösen lässt.

Um außerdem den Einband und/oder die Deckschicht selbst von der entsprechenden Walze auf einfache Weise lösen zu können, hat es sich als vorteilhaft erwiesen, wenn die Saugeinrichtungen in einem Bereich von Winkelstellungen der Walzen inaktiv werden, in welchem die Deckschicht vom Einband abgelöst ist.

Im Folgenden wird die Erfindung an einem in der Zeichnung dargestellten Ausführungsbeispiel näher erläutert; es zeigen:
- Fig. 1: eine perspektivische Ansicht eines buchförmigen Ausweis-, Wert- oder Sicherheitsdokuments,
- Fig. 2a)-2f): Verfahrensschritte zur Herstellung des buchförmigen Ausweis-, Wert-oder Sicherheitsdokuments aus Figur 1,
- Fig. 3: eine Perspektivansicht einer Vorrichtung zum Ablösen einer Deckschicht einer mehrschichtigen Lage, welche an einem Einband eines Ausweis-, Wert- oder Sicherheitsdokuments angebracht ist, wobei ein Zuführ- und ein Sammelmagazin vorhanden sind,
- Fig. 4: eine perspektivische Unteransicht auf die Vorrichtung zur Ablösung aus Figur 3,
- Fig. 5: einen Längsschnitt durch eine der Walzen der Vorrichtung zum Ablösen der Deckschicht aus Figur 3, und
- Fig. 6: einen Querschnitt durch eine der Walzen der Vorrichtung zum Ablösen der Deckschicht aus Figur 3.

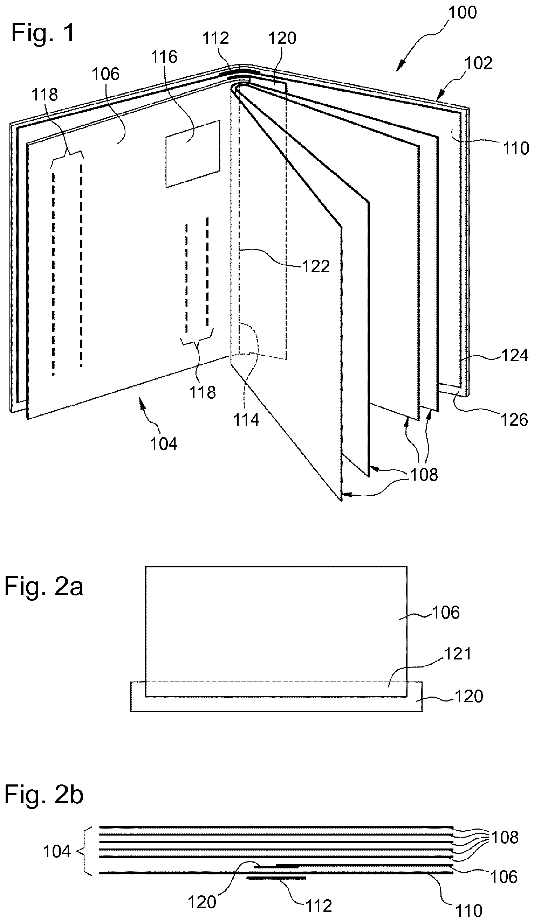

In Figur 1 ist ein buchförmiges Ausweis-, Wert- oder Sicherheitsdokument 100 gezeigt. Das Ausweis-, Wert- oder Sicherheitsdokument 100 ist beispielsweise ein Identifikationsdokument, insbesondere ein Reisepass oder ein Personalausweis. Das Ausweis-, Wert- oder Sicherheitsdokument 100 weist einen Einband 102 sowie einen im Einband 102 gehaltenen Passbuchblock 104 auf. Der Passbuchblock 104 besteht aus einer Datenkarte 106, mehreren Passbuchseiten 108, einem Vorsatzblatt 110 sowie einem Fälzelband 112, die mit einer Naht 114 miteinander verbunden sind.

Die Datenkarte 106 ist eine kunststoff- oder papierbasierte Karte, auf der personen- und/oder dokumentenspezifische Informationen aufgebracht sind. Beispielsweise kann die Datenkarte 106 ein Passbild 116 und personenbezogene Informationen 118 eines Nutzers aufweisen. Die Informationen 118 sind vorzugsweise in einer maschinenlesbaren Form auf die Datenkarte 106 aufgebracht. Die Datenkarte 106 weist ebenfalls ein maschinenlesbares Identifikationsmerkmal auf, das die Datenkarte 106 eindeutig während des Herstellungsprozesses des Ausweis-, Wert-oder Sicherheitsdokuments 100 identifiziert. Die Datenkarte 106 weist des Weiteren einen Chip auf, in dem personen- und/oder dokumentenspezifische Informationen gespeichert werden können. Insbesondere weist der Chip einen gesicherten Speicherbereich zur Speicherung der personen- und/oder dokumentenspezifischen Informationen auf. Des Weiteren kann die Datenkarte 106 sichtbare und/oder unsichtbare Sicherheitsmerkmale aufweisen, die ein Fälschen der Datenkarte 106 verhindern.

An der Datenkarte 106 ist eine, insbesondere flexible, Lasche 120 vorgesehen, die aus einem Endlosband hergestellt ist. Das Endlosband besteht aus einem Gewebe, das mit einem flexiblen Kunststoffmaterial beschichtet und/oder ummantelt ist. Die Lasche 120 ist form- und/oder stoffschlüssig an der Datenkarte 106 befestigt und somit Teil der Datenkarte 106. Auf der Lasche 120 können weitere Sicherheitsmerkmale vorgesehen sein.

Die Passbuchseiten 108 sind jeweils aus einem Druckbogen, vorzugsweise einem Papierbogen geschnitten und entlang ihrer Mittellinie 122 gefaltet. Die Passbuchseiten 108 können bedruckt sein, beispielsweise mit weiteren personen- und/oder dokumentenspezifischen Informationen, Seitenzahlen oder anderen Informationen. Im Falle des deutschen Reisepasses werden diese personen- und/oder dokumentenspezifischen Daten und Informationen unter Ziffern 11 bis 14 auf der ersten oder den ersten Passbuchseiten 108 aufgedruckt oder aufgebracht sein. Die Passbuchseiten 108 können des Weiteren für den Empfang von Stempeln, beispielsweise Visastempeln, vorbereitet sein. Vorzugsweise enthalten die Passbuchseiten 108 ebenfalls Sicherheitsmerkmale, die ein Fälschen der Passbuchseiten 108 verhindern. Die Sicherheitsmerkmale können beispielweise aufgedruckt, in die Passbuchseiten 108 eingearbeitet oder in diese eingebracht sein. Beispielsweise enthalten die Passbuchseiten 108 eine Perforation, wobei sich die Perforation durch die Passbuchseiten 108 vorzugsweise konisch verjüngt.

Das Vorsatzblatt 110 bildet den äußeren Abschluss des Passbuchblocks 104. Mit einer Außenseite 124 des Vorsatzblattes 110 wird der Passbuchblock 104 auf eine Innenseite 126 des Einbandes 102 aufgeklebt. Das Fälzelband 112 dient als Verstärkung des Nahtbereichs und ist vor dem Vernähen des Passbuchblocks 104 auf die Außenseite 124 des Vorsatzblattes 110 aufgeklebt.

Die Herstellung des Ausweis-, Wert- oder Sicherheitsdokuments 100 soll nachfolgend anhand der Figuren 2a bis 2f beschrieben werden.

In einem ersten Verfahrensschritt wird die Datenkarte 106 bereitgestellt und die Lasche 120 an der Datenkarte angebracht (Figur 2a). Dabei wird die Lasche 120 in einem Überlappungsbereich 121 form- und/oder stoffschlüssig mit der Datenkarte 106 verbunden und auf die gewünschte Länge geschnitten.

Anschließend wird das Fälzelband 112 auf den Nahtbereich des Vorsatzblattes 110 aufgebracht und der Passbuchblock 104 bestehend aus den Passbuchseiten 108, der Datenkarte 106 und dem Vorsatzblatt 110 zusammengestellt (Figur 2b). Die Datenkarte 106 wird derart in den Passbuchblock 104 eingelegt, dass die Lasche 120 im Nahtbereich angeordnet ist.

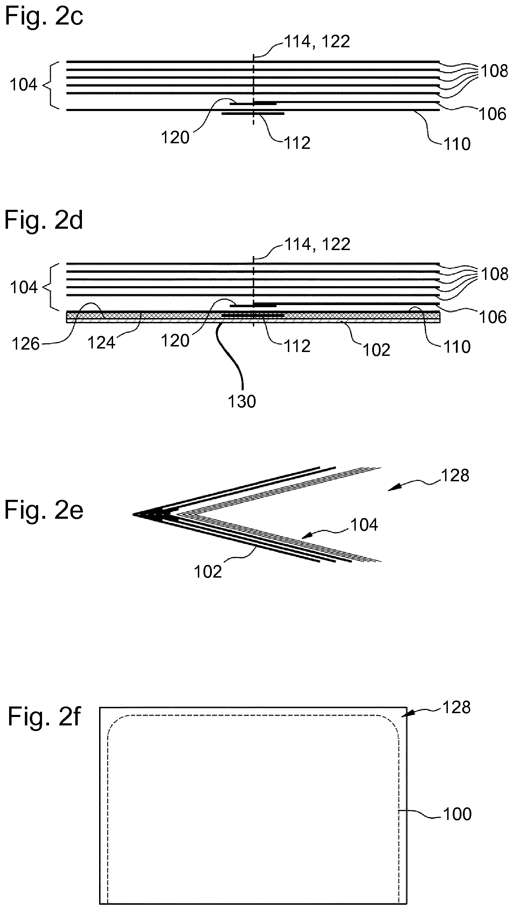

Anschließend wird der Passbuchblock 104 mit einer Naht 114 entlang der Mittellinie 122 der Passbuchseiten 108 vernäht (Figur 2c).

Nach dem oder zeitgleich mit dem Vernähen des Passbuchblocks 104 wird der Einband 102 bereitgestellt. Die Innenseite 126 des Einbands 102 wird mit der Außenseite 124 des Vorsatzblattes 110 verklebt und der so entstandene Passbuchrohling 128 gefaltet (Figuren 2d und 2e).

Anschließend werden die freien Ränder des Passbuchrohlings 128 bearbeitet und somit der Passbuchrohling 128 auf das endgültige Format des Ausweis-, Wert- oder Sicherheitsdokuments 100 geschnitten (Figur 2f).

Die vorliegende Erfindung beschäftigt sich mit der Bereitstellung des Einbands 102, insbesondere mit der Anbringung einer Klebstoffschicht am Einband 102 des Ausweis-, Wert- oder Sicherheitsdokuments 100.

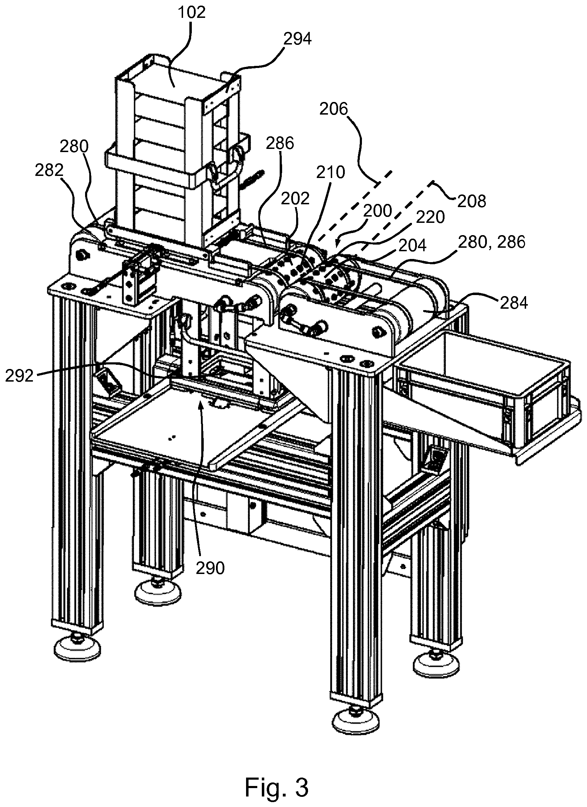

Die Klebstoffschicht ist Bestandteil einer mehrschichtigen Lage 300, wobei auf die Klebstoffschicht eine Deckschicht 304 in Form eines Liners angeordnet ist Die mehrschichtige Lage 300 ist dabei bereits am Einband 102 angebracht, wobei die Klebstoffschicht an dessen Innenseite 126 haftet. Bisher wurde die Deckschicht 304 vo Hand gelöst bevor der Einband 102 mit dem Passbuchblock 104 verklebt wurde. Diese Aufgabe kann nun eine in Figur 3 gezeigte Vorrichtung 200 zum Ablösen der Deckschicht 304 von der an dem Einband 102 des Ausweis-, Wert-, oder Sicherheitsdokuments 100 angebrachten mehrschichtigen Lage 300 wahrnehmen.

Die Vorrichtung 200 umfasst eine motorisch kontinuierlich oder getaktet angetriebene erste Walze 202 zur Förderung des Einbands 102, sowie eine bezüglich der ersten Walze 202 derart ausgerichtete zweite Walze 204, dass der Einband 102 in einem zumindest zeitweise zwischen den beiden Walzen 202, 204 ausgebildeten Spalt hindurchtreten kann. An der ersten Walze 202 ist eine radial bezüglich ihrer Walzenlängsachse 206 orientierte erste Saugeinrichtung 210 angeordnet oder ausgebildet, die mit einer nicht näher dargestellten Unterdruckeinrichtung, insbesondere mit einem Vakuumgerät, strömungsverbunden und derart ausgestaltet ist, um den Einband 102 zumindest teilweise und/oder bereichsweise an der ersten Walze 202 zu fixieren. Zudem ist an der zweiten Walze 204 eine radial bezüglich ihrer Walzenlängsachse 206 orientierte zweite Saugeinrichtung 220 angeordnet oder ausgebildet, die mit der Unterdruckeinrichtung der ersten Saugeinrichtung 210 oder mit einer davon getrennten - ebenfalls nicht näher dargestellten - zweiten Unterdruckeinrichtung, insbesondere einem Vakuumgerät, strömungsverbunden und derart ausgestaltet ist, um beim Kontaktieren der Deckschicht 304 diese von der mehrschichtigen Lage 300 vom Einband 102 abzulösen.

Vorliegend ist der ersten Walze 202 ein Zuführmagazin 290 zugeordnet zur Zuführung der Einbände 102, an denen die die Deckschicht 304 umfassende mehrschichtige Lage 300 angebracht ist. Dieses Zuführmagazin 290 umfasst eine Fördereinrichtung 292, die vorliegend als ein Vertikalförderer für den Transport der Einbände 102 zu der ersten Walze 202 gebildet ist. Zudem umfasst die Vorrichtung 200 ein Sammelmagazin 294, welches ausgestaltet ist, die deckschichtfreien Einbände 102 für die Weiterverarbeitung zu stapeln und/oder zu sammeln.

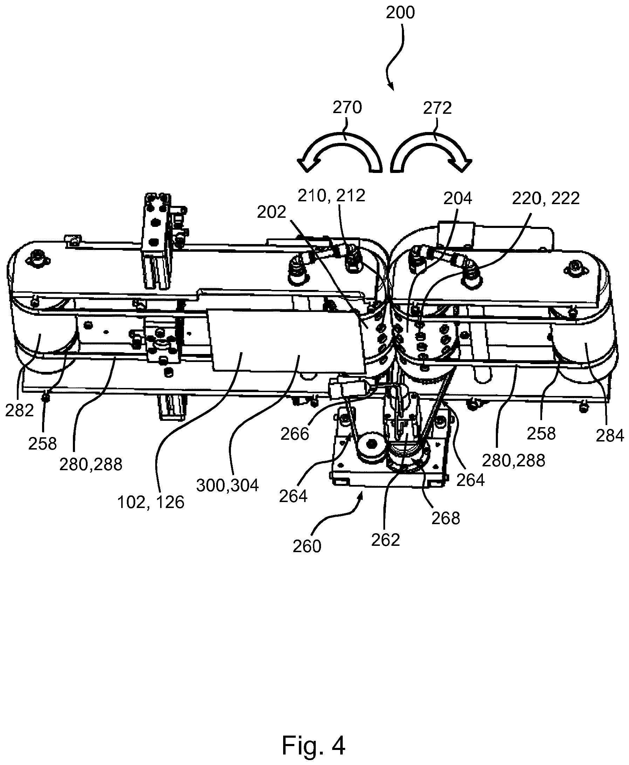

Anhand der Unteransicht der Figur 4 lässt sich erkennen, dass eine Antriebseinrichtung 260 vorhanden ist, die ausgestaltet ist, die erste Walze 202 kontinuierlich oder getaktet in einer Drehrichtung 270 anzutreiben, und die ausgestaltet ist, zugleich die zweite Walze 204 kontinuierlich oder getaktet in einer der Drehrichtung 270 entgegengesetzten Rotationsrichtung 272 anzutreiben. Vorliegend erfolgt der Antrieb der beiden Walzen 202, 204 jeweils mittels eines Riementriebs 264, der einen Zahnriemen umfasst, welcher mit einer Walzenverzahnung 266 wechselwirkt. Die Umdrehung eines Motors 262 wird auf ein Zahnrad übertragen, welches dem Riementrieb 264 der zweiten Walze 204 zugeordnet ist. Dieses Zahnrad verzahnt dabei mit einem weiteren Zahnrad, welches dem Riementrieb 264 der ersten Walze 202 zugeordnet ist, so dass diese beiden Zahnräder insbesondere mit gleicher Geschwindigkeit gegenläufig umlaufen. Die beiden Zahnräder bilden somit eine Kupplungseinheit 268, die vorliegend in einem Gehäuse angeordnet ist. Es ist auch möglich, dass die Umdrehung des Motors 262 auf ein Zahnrad übertragen wird, das dem Riementrieb 264 der ersten Walze 202 zugeordnet ist, und dass das angetriebene Zahnrad dann ein Zahnrad des Riementriebs 264 der zweiten Walze 204 antreibt.

An der ersten Walze 202 ist mindestens ein, vorliegend sind genau zwei, um eine erste Umlenkwalze 284 geführte Transportbänder 280 für den Transport des Einbands 102 mit und ohne der Deckschicht 304 angeordnet. Eine andere Anzahl an Transportbändern 280 ist möglich. Die zweite Umlenkwalze 284 läuft ebenfalls um ihre Längsachse um, da sie vom Transportband 280 mitgenommen wird, welches durch die erste Walze 202 ebenfalls angetrieben wird. Einem Leertrum 288 kann dabei der Einband 102 mittels der Fördereinrichtung 292 zugeführt werden, womit dieser an seiner Außenseite 130 mittels der ersten Saugeinrichtung 210 an der ersten Walze 202 fixiert werden kann. Vorliegend laufen die Transportbänder 280 in Vertiefungen 258 oder in Rillen der Walzen 202, 204, so dass das Transportband 280 nicht über die Mantelfläche der Walzen 202, 204 hinausragt. Ein Transporttrum 286 des Transportbandes 280 dient dabei dem Abtransport des deckschichtlosen Einbands 102 bzw. zu dessen Zuführen an das Sammelmagazin 294.

Analog zu der Konfiguration der ersten Walze 202, ist vorliegend auch an der zweiten Walze 204 mindestens ein, vorliegend sind genau zwei, um eine zweite Umlenkwalze 284 geführte Transportbänder 280 angeordnet, welche dem Abtransport der abgelösten Deckschicht 304 dienen. Eine andere Anzahl an Transportbändern 280 ist möglich. Bei der zweiten Walze 202 bleibt das Leertrum 288 frei, wobei das Transporttrum 286 ausgestaltet ist, um die abgelöste Deckschicht 304, beispielsweise zu einem Sammelbehälter, abzutransportieren.

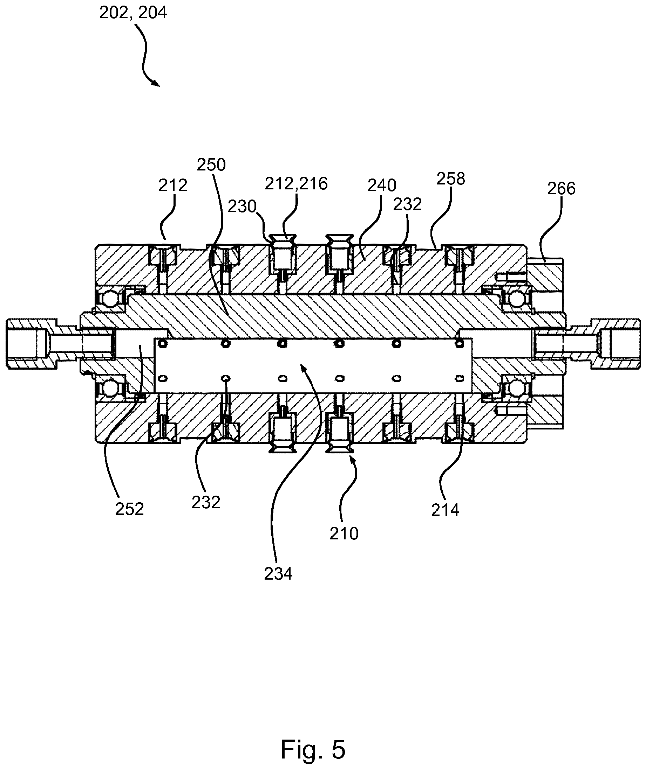

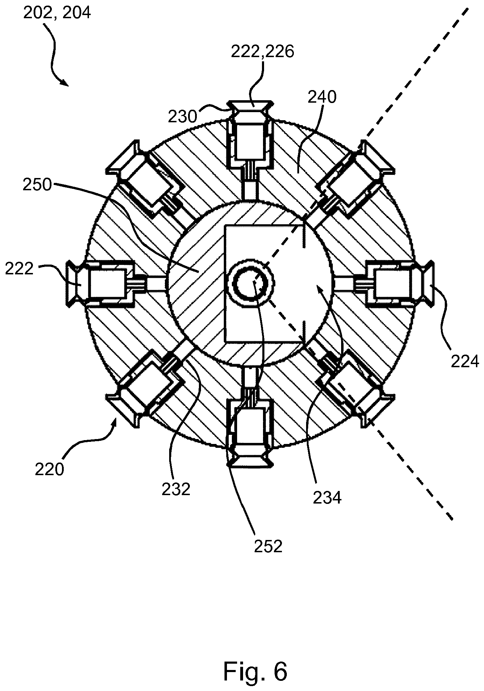

Der beispielhafte Aufbau der beiden Walzen 202, 204 wird anhand der Schnittansichten der Figuren 5 und 6 erläutert. Beide Walzen 202, 204 sind vorliegend identisch aufgebaut, weswegen in Figur 5 die Bezugszeichen der Bauteile der ersten Walze 202 und in Figur 6 die Bezugszeichen der Bauteile der zweiten Walze 204 verwendet werden.

Die erste Saugeinrichtung 210 besteht vorliegend aus einer Mehrzahl von ersten Sauggreifern 212, die gleichmäßig über einen Mantel der ersten Walze 202 verteilt angeordnet sind. Außerdem besteht die zweite Saugeinrichtung 220 aus einer Mehrzahl von zweiten Sauggreifern 222, die gleichmäßig über einen Mantel der zweiten Walze 204 verteilt angeordnet sind.

Die Sauggreifer 212, 222 sind vorliegend in mehreren parallel zur Walzenlängsachse 206, 208 orientierten Reihen 214, 224 angeordnet, wobei die Reihen 214, 224 gleichverteilt über den Umfang der Walze 202, 204 angeordnet sind. In jeder Reihe 214, 224 sind mehrere Sauggreifer 212, 222 angeordnet, wobei vorliegend jede Reihe sechs der Sauggreifer 212, 222 umfasst. Die zentral oder zumindest nahe der Walzenmitte angeordneten Sauggreifer 212, 222 sind als Mittelsauggreifer 216, 226 gebildet, die über den Umfang der Walzen 202, 204 radial hervorstehen. Dadurch lässt sich der Einband 102 und/oder die Deckschicht 304 krümmen, wodurch sich im Falle des Einbands 102 eine vereinzelte Entnahme des Einbands 102 aus dem Zuführmagazin 290 ergibt.

Alternativ oder ergänzend können diese Mittelsauggreifer 216, 226 einen axial komprimierbaren Balg 230 umfassen, der in einem Zustand, in welchem ein Unterdruck am Mittelsauggreifer 216, 226 angelegt ist, radial gegen eine Rückstellkraft eingerückt ist. Die Rückstellkraft kann sich aus seiner Material- und/oder Formgebung ergeben. Wenn kein Unterdruck mehr am Balg 230 anliegt, so rückt er radial bezüglich der Walzenlängsachse 206, 208 aus, womit ein Auswerfen oder Freigeben der Deckschicht 304 und/oder des deckschichtfreien Einbands 102 von den Walzen 202, 204 erfolgt.

Die Saugeinrichtungen 210, 220 umfassen vorliegend einen in einer Walzenwand 240 ausgebildeten Durchtritt 232. Dieser Durchtritt 232 ist zumindest zeitweise mit einem im Inneren der Walze 202, 204 ausgebildeten Saugvolumen 234 strömungsverbunden. Dieses Saugvolumen 234 ist wiederum mit der Unterdruckeinrichtung und/oder mit der zweiten Unterdruckeinrichtung strömungsverbunden. In der hohlzylindrisch gebildeten Walzenwand 240 ist vorliegend ein Steuerelement 250 angeordnet, welches vorliegend drehfest gegenüber den Walzen 202, 204 und koaxial zur Walzenlängsachse 206, 208 angeordnet ist. Dieses Steuerelement 250 weist eine Durchführung 252 auf, die mit der Unterdruckeinrichtung bzw. der zweiten Unterdruckeinrichtung strömungsverbunden ist. Das Steuerelement 250 ist im Bereich der Sauggreifer 212, 222 aus einem Zylindersegment 254 geformt, das ausgestaltet ist, die Durchtritte 232 reihenweise zu blockieren, wenn die Walze 202, 204 unter einer vorgegebenen Winkelstellung, insbesondere innerhalb eines vorgegebenen Bereichs von Winkelstellungen angeordnet ist. Werden also die Durchtritte 232 der Sauggreifer 212, 222 durch den Körper des Steuerelements 250, mithin durch das Zylindersegment 254 blockiert, so sind die Sauggreifer 212, 222 drucklos geschaltet. Damit ist gewährleistet, dass eine Saugkraft der Saugeinrichtungen 210, 220 nur im Bereich der gegenüberliegenden Walze 202, 204 wirksam ist, womit sich der deckschichtfreie Einband 102 von der ersten Walze 202 und die abgelöste Deckschicht 304 von der zweiten Walze 204 auf einfache Weise wieder ablösen lassen. Vorliegend sind die Saugeinrichtungen 210, 220 über einen Winkelbereich von zwischen 90 Grad und 120 Grad wirksam, wie er beispielsweise strichliert in Figur 6 eingezeichnet ist.

Abschließend wird nachfolgend beschrieben, wie die Vorrichtung 200 zum Ablösen der Deckschicht 304 betrieben wird.

In dem Zuführmagazin 290 wird der mit der mehrschichtigen Lage 300 versehene Einband 102 bereitgestellt und mittels der Fördereinrichtung 292, insbesondere vertikal, der ersten Walze 202 zugeführt. Anschließend wird die der Deckschicht 304 abgewandte Außenseite 130 des Einbands 102 an der ersten Walze 202 mittels der ersten Saugeinrichtung 210 fixiert, wobei eine vereinzelte Entnahme ermöglicht ist aufgrund der unterschiedlich langen ersten Sauggreifer 212. Mittels der Antriebseinrichtung 260 wird die erste Walze 202 dann verdreht, wodurch der Einband 102 auf den Mantel der ersten Walze 202 gesaugt, mithin gekrümmt wird. Der Einband 102 wird dann zu dem zwischen der ersten Walze 202 und der zweiten Walze 204 gebildeten Spalt transportiert, wo sodann die zweite Saugeinrichtung 220 mit ihren Sauggreifern 222, die der Außenseite 130 des Einbands 102 abgewandte Seite kontaktiert und somit die Deckschicht 304 der mehrschichtigen Lage 300 an der zweiten Walze 204 fixiert wird. In diesem Zuge wird die Deckschicht 304 von der Klebstoffschicht abgelöst und vollständig getrennt wenn die Walzen 202, 204 weiter kontinuierlich oder getaktet angetrieben werden. Anschließend werden die Saugeinrichtungen 210, 220 inaktiv gestellt, wenn die Deckschicht 304 vom Einband 102 abgelöst ist. Die Deckschicht 304 wird auf dem Transportband 280 der zweiten Walze 204 zu einem Sammelbehälter gefördert, wobei der deckschichtfreie Einband 102 auf dem Transportband 280 der ersten Walze 202 transportiert wird zu dem Sammelmagazin 294, in welchem die deckschichtfreien Einbände 102 für deren Weiterverarbeitung gestapelt und/oder gesammelt werden.

Die vorliegende Vorrichtung 200 und das vorstehend beschriebene Verfahren zeichnen sich durch einen besonders hohen Automatisierungsgrad aus, so dass die Durchlaufzeit für die Herstellung von Ausweis-, Wert- oder Sicherheitsdokumenten 100 reduziert und deren Herstellkosten minimiert werden können.

### BEZUGSZEICHENLISTE

- 100: Ausweis-, Wert- oder Sicherheitsdokument
- 102: Einband
- 104: Passbuchblock
- 106: Datenkarte
- 108: Passbuchseiten
- 110: Vorsatzblatt
- 112: Fälzelband
- 114: Naht
- 116: Passbild
- 118: Daten oder Informationen
- 120: Lasche
- 121: Überlappungsbereich
- 122: Mittellinie
- 124: Außenseite des Vorsatzblattes
- 126: Innenseite des Einbandes
- 128: Passbuchrohling
- 130: Außenseite des Einbands
- 200: Vorrichtung zum Ablösen
- 202: erste Walze (Transportwalze)
- 204: zweite Walze (Lösewalze)
- 206: Walzenlängsachse (erste Walze)
- 208: Walzenlängsachse (zweite Walze)
- 210: erste Saugeinrichtung
- 212: erster Sauggreifer
- 214: Reihe der ersten Sauggreifer
- 216: Mittelsauggreifer (der ersten Saugeinrichtung)
- 220: zweite Saugeinrichtung
- 222: zweiter Sauggreifer
- 224: Reihe der zweiten Sauggreifer
- 226: Mittelsauggreifer (der zweiten Saugeinrichtung)
- 230: Balg
- 232: Durchtritt
- 234: Saugvolumen
- 240: Walzenwand
- 250: Steuerelement
- 252: Durchführung
- 254: Zylindersegment
- 258: Vertiefung (Laufrille)
- 260: Antriebseinrichtung
- 262: Motor
- 264: Riementrieb
- 266: Walzenverzahnung
- 268: Kupplungseinheit
- 270: Drehrichtung
- 272: Rotationsrichtung
- 280: Transportband
- 282: erste Umlenkwalze
- 284: zweite Umlenkwalze
- 286: Transporttrum
- 288: Leertrum
- 290: Zuführmagazin
- 292: Fördereinrichtung
- 294: Sammelmagazin
- 300: mehrschichtige Lage

- 304: Deckschicht (Liner)

## Patentansprüche

1. Vorrichtung (200) zum Ablösen einer Deckschicht (304) von einer an einem Einband (102) eines Ausweis-, Wert- oder Sicherheitsdokuments (100) angebrachten mehrschichtigen Lage (300),
mit einer motorisch kontinuierlich oder getaktet angetriebenen ersten Walze (202) zur Förderung des Einbands (102) und einer bezüglich der ersten Walze (202) derart ausgerichteten zweiten Walze (202), dass der Einband (102) in einem zumindest zeitweise zwischen den beiden Walzen (202; 204) ausgebildeten Spalt hindurchtreten kann,
wobei an der ersten Walze (202) radial bezüglich ihrer Walzenlängsachse (206) mindestens eine erste Saugeinrichtung (210) angeordnet oder ausgebildet ist, die mit einer Unterdruckeinrichtung strömungsverbunden und derart ausgestaltet ist, um den Einband (102) zumindest teilweise an der ersten Walze (202) zu fixieren,
und wobei an der zweiten Walze (204) radial bezüglich ihrer Walzenlängsachse (206) mindestens eine zweite Saugeinrichtung (220) angeordnet oder ausgebildet ist, die mit der Unterdruckeinrichtung oder einer zweiten Unterdruckeinrichtung strömungsverbunden und derart ausgestaltet ist, um beim Kontaktieren der Deckschicht (304) diese von der mehrschichtigen Lage (300) vom Einband (102) abzulösen **dadurch gekennzeichnet, dass**
dass die erste Saugeinrichtung (210) aus einer Mehrzahl von ersten Sauggreifern (212) gebildet ist, die über einen Mantel der ersten Walze (202) verteilt angeordnet sind und/oder dass die zweite Saugeinrichtung (220) aus einer Mehrzahl von zweiten Sauggreifern (222) gebildet ist, die über einen Mantel der zweiten Walze (204) verteilt angeordnet sind, und dass einer oder mehrere der Sauggreifer (212; 222) einen axial komprimierbaren Balg umfasst, der derart ausgestaltet ist, beim Ansaugen oder Aktivstellen der Saugeinrichtung (210; 220) einen radial bezüglich der Walzenlängsachse (206) orientierten Hub entgegen einer Rückstellkraft auszuführen.

2. Vorrichtung (200) nach Anspruch 1, **dadurch gekennzeichnet, dass** die Mehrzahl von ersten Sauggreifern (212) und/oder die Mehrzahl von zweiten Sauggreifern (222) in einer oder in mehreren parallel zur Walzenlängsachse (206; 208) orientierten Reihen (214; 224) angeordnet sind.

3. Vorrichtung (200) nach Anspruch 1 oder 2, **dadurch gekennzeichnet, dass** die Mehrzahl der ersten Sauggreifer (212) und/oder die Mehrzahl der zweiten Sauggreifer (222) mindestens einen zentral oder zumindest nahe der Walzenmitte angeordneten Mittelsauggreifer (216; 226) umfasst, der über den Umfang der betreffenden Walze (202; 204) hervorsteht.

4. Vorrichtung (200) nach einem der Ansprüche 1 bis 3, **dadurch gekennzeichnet, dass** die erste Saugeinrichtung (210) und/oder die zweite Saugeinrichtung (220) über einen Winkelbereich von zwischen 60 Grad und 180 Grad, vorzugsweise zwischen 90 Grad und 120 Grad wirksam ist, und dass der Winkelbereich auf einer Seite der Walze (202; 204) ausgebildet ist, die der ihr gegenüberliegenden Walze (202; 204) zugewandt ist.

5. Vorrichtung (200) nach einem der Ansprüche 1 bis 4, **dadurch gekennzeichnet, dass** die erste Saugeinrichtung (210) und/oder die zweite Saugeinrichtung (220) mindestens einen in einer Walzenwand (240) der Walze (202; 204) ausgebildeten Durchtritt (232) umfasst, welcher mit einem im Inneren der Walze (202; 204) ausgebildeten Saugvolumen (234) zumindest zeitweise verbunden ist, welches mit der Unterdruckeinrichtung und/oder mit der zweiten Unterdruckeinrichtung strömungsverbunden ist.

6. Vorrichtung (200) nach Anspruch 5, **dadurch gekennzeichnet, dass** im Inneren der Walze (202; 204) ein Steuerelement (250) angeordnet ist, das einen oder mehrere der Durchtritte (232) blockiert, wenn die Walze (202; 204) unter einer vorgegebenen Winkelstellung oder innerhalb eines vorgegebenen Bereichs von Winkelstellungen angeordnet ist.

7. Vorrichtung (200) nach einem der Ansprüche 1 bis 6, **dadurch gekennzeichnet, dass** eine Antriebseinrichtung (260) vorhanden ist, die ausgestaltet ist, die erste Walze (202) kontinuierlich oder getaktet in einer Drehrichtung (270) anzutreiben, und die ausgestaltet ist, zugleich die zweite Walze (204) kontinuierlich oder getaktet in einer der Drehrichtung (270) entgegengesetzten Rotationsrichtung (272) anzutreiben.

8. Vorrichtung (200) nach einem der Ansprüche 1 bis 7, **dadurch gekennzeichnet, dass** an der ersten Walze (202) mindestens ein um eine erste Umlenkwalze (284) geführtes Transportband (280) für den Transport des Einbands (102) mit und ohne die Deckschicht (304) angeordnet ist.

9. Vorrichtung (200) nach einem der Ansprüche 1 bis 8, **dadurch gekennzeichnet, dass** an der zweiten Walze (204) mindestens ein um eine zweite Umlenkwalze (284) geführtes Transportband (280) für den Abtransport der abgelösten Deckschicht (304) angeordnet ist.

10. Vorrichtung (200) nach einem der Ansprüche 1 bis 9, **dadurch gekennzeichnet, dass** der ersten Walze (202) ein Zuführmagazin (290) zugeordnet ist zur Zuführung der Einbände (102), an denen die die Deckschicht (304) umfassende mehrschichtige Lage (300) angebracht ist, und dass das Zuführmagazin (290) eine Fördereinrichtung (292) für den Transport der Einbände (102) zu der ersten Walze (202) umfasst.

11. Vorrichtung (200) nach einem der Ansprüche 1 bis 10, **dadurch gekennzeichnet, dass** ein Sammelmagazin (294) vorhanden ist, das ausgestaltet ist, die deckschichtfreien Einbände (102) für die Weiterverarbeitung zu stapeln und/oder zu sammeln.

12. Verfahren zur Ablösung einer Deckschicht (304) einer mehrschichtigen Lage (300), die auf einem Einband (102) eines Ausweis-, Wert- oder Sicherheitsdokuments (100) angebracht ist, dieses umfassend die Schritte:
- Zuführen des Einbands (102) an eine erste Walze (202),
- Zumindest teilweises Fixieren einer der Deckschicht (304) abgewandten Außenseite (130) des Einbands (102) an der ersten Walze (202) mittels einer radial bezüglich einer Walzenlängsachse (206) orientierten ersten Saugeinrichtung (210), die aus einer Mehrzahl von ersten Sauggreifern (212) gebildet ist, die über einen Mantel der ersten Walze (202) verteilt angeordnet sind, und die einen axial komprimierbaren Balg umfassen, der beim Fixieren entgegen einer Rückstellkraft verstellt wird,
- Kontinuierliches oder getaktetes Antreiben der ersten Walze (202) um ihre Walzenlängsachse (206), zumindest so weit, bis der Einband (102) in einen zwischen der ersten Walze (202) und einer zweiten Walze (204) zumindest zeitweise vorhandenen Spalt transportiert wird,
- Kontaktieren und zumindest teilweises Fixieren der Deckschicht (304) an der zweiten Walze (204) mittels einer radial bezüglich einer Walzenlängsachse (208) orientierten zweiten Saugeinrichtung (220), die aus einer Mehrzahl von zweiten Sauggreifern (222) gebildet ist, die über einen Mantel der zweiten Walze (204) verteilt angeordnet sind, und die einen axial komprimierbaren Balg umfassen, der beim Fixieren entgegen einer Rückstellkraft verstellt wird, und
- Ablösen der an der zweiten Saugeinrichtung (220) zumindest teilweise fixierten Deckschicht (304) von der mehrschichtigen Lage (300) durch ein weiteres kontinuierliches oder getaktetes Antreiben der ersten Walze (202) um ihre Walzenlängsachse (206).

13. Verfahren nach Anspruch 12, **dadurch gekennzeichnet, dass** die erste Walze (202) mittels einer Antriebseinrichtung (260) kontinuierlich oder getaktet in einer Drehrichtung (270) angetrieben wird, und dass die zweite Walze (204) zugleich kontinuierlich oder getaktet mittels der Antriebseinrichtung (260) in einer der Drehrichtung (270) entgegengesetzten Rotationsrichtung (272) angetrieben wird.

14. Verfahren nach Anspruch 12 oder 13, **dadurch gekennzeichnet, dass** die Saugeinrichrichtungen (210; 220) in einem Bereich von Winkelstellungen der Walzen (202; 204) inaktiv werden, in welchem die Deckschicht (304) vom Einband (102) abgelöst ist.

## Claims

1. Apparatus (200) for detaching a cover layer (304) from a multilayer layer (300) attached to a cover (102) of an identification, value or security document (100), with a first roller (202), which is driven continuously or in a clocked manner by a motor, for conveying the cover (102), and a second roller (202), which is aligned with respect to the first roller (202) in such a way that the cover (102) can pass through a gap formed at least temporarily between the two rollers (202; 204),
wherein at least one first suction device (210) is arranged or formed on the first roller (202) radially with respect to its longitudinal roll axis (206), which suction device (210) is flow-connected to a vacuum device and is configured in such a way as to fix the cover (102) at least partially on the first roller (202),
and wherein at least one second suction device (220) is arranged or formed on the second roller (204) radially with respect to its longitudinal roll axis (206), which second suction device is flow-connected to the vacuum device or to a second vacuum device and is configured in such a way that, upon contacting the cover layer (304), the latter is detached from the multi-layered layer (300) of the cover (102),
**characterized in that**
the first suction device (210) is formed from a plurality of first suction grippers (212) which are arranged distributed over a shell of the first roller (202) and/or in that the second suction device (220) is formed from a plurality of second suction grippers (222) which are arranged distributed over a shell of the second roller (204), and **in that** one or more of the suction grippers (212; 222) comprises an axially compressible bellows which is designed to execute a stroke oriented radially with respect to the longitudinal roll axis (206) of the hub against a restoring force when the suction device (210; 220) is sucked in or activated.

2. Apparatus (200) according to claim 1, wherein the plurality of first suction pads (212) and/or the plurality of second suction pads (222) are arranged in one or more rows (214; 224) oriented parallel to the longitudinal roll axis (206; 208).

3. Apparatus (200) according to claim 1 or 2, wherein the plurality of first suction pads (212) and/or the plurality of second suction pads (222) comprises at least one central suction pad (216; 226) arranged centrally or at least close to the center of the roller and protruding above the circumference of the respective roller (202; 204).

4. Apparatus (200) according to any one of claims 1 to 3, wherein the first suction means (210) and/or the second suction means (220) is effective over an angular range of between 60 degrees and 180 degrees, preferably between 90 degrees and 120 degrees, and in that the angular range is formed on a side of the roller (202; 204) facing the opposite roller (202; 204).

5. Apparatus (200) according to any one of claims 1 to 4, wherein the first suction device (210) and/or the second suction device (220) comprises at least one passage (232) formed in a roller wall (240) of the roller (202; 204), which passage is at least temporarily connected to a suction volume (234) formed in the interior of the roller (202; 204), which suction volume is flow-connected to the vacuum device and/or to the second vacuum device.

6. Apparatus (200) of claim 5, wherein a control element (250) is disposed inside the roller (202; 204) for blocking one or more of the passages (232) when the roller (202; 204) is disposed at a predetermined angular position or within a predetermined range of angular positions.

7. Apparatus (200) according to any one of claims 1 to 6, wherein a drive device (260) is provided, which is configured to drive the first roller (202) continuously or in a clocked manner in one direction of rotation (270), and which is configured to simultaneously drive the second roller (204) continuously or in a clocked manner in a direction of rotation (272) opposite to the direction of rotation (270).

8. Apparatus (200) according to any one of claims 1 to 7, wherein at least one conveyor belt (280) guided around a first deflection roller (284) is arranged on the first roller (202) for transporting the cover (102) with and without the cover layer (304).

9. Apparatus (200) according to any one of claims 1 to 8, wherein at least one conveyor belt (280) guided around a second deflection roller (284) is arranged on the second roller (204) for transporting away the detached top layer (304).

10. Apparatus (200) according to any one of claims 1 to 9, wherein a feed magazine (290) is associated with the first roller (202) for feeding the covers (102) to which the multilayer ply (300) comprising the cover layer (304) is attached, and in that the feed magazine (290) comprises a conveyor (292) for transporting the covers (102) to the first roller (202).

11. Apparatus (200) according to any one of claims 1 to 10, wherein a collecting magazine (294) is provided, which is configured to stack and/or collect the coverless covers (102) for further processing.

12. Method of peeling a cover layer (304) of a multilayer ply (300) applied to a cover (102) of an identification, value or security document (100), this comprising the steps of:
- Feeding the cover (102) to a first roller (202),
- at least partially fixing an outer side (130) of the cover (102) facing away from the cover layer (304) to the first roll (202) by means of a first suction device (210) oriented radially with respect to a longitudinal roll axis (206), which suction device is formed from a plurality of first suction grippers (212), which are arranged distributed over a shell of the first roll (202) and which comprise an axially compressible bellows which is displaced counter to a restoring force during fixing,
- continuously or clocked driving the first roller (202) about its longitudinal roll axis (206), at least until the cover (102) is transported into a gap at least temporarily present between the first roller (202) and a second roller (204),
- contacting and at least partially fixing the cover layer (304) to the second roller (204) by means of a second suction device (220) which is oriented radially with respect to a longitudinal roll axis (208) and is formed from a plurality of second suction grippers (222) which are arranged distributed over a shell of the second roller (204) and which comprise an axially compressible bellows which is displaced counter to a restoring force during fixing, and
- detaching the cover layer (304) at least partially fixed to the second suction device (220) from the multilayer ply (300) by a further continuous or clocked driving of the first roller (202) about its longitudinal roll axis (206).

13. Method according to claim 12, wherein the first roller (202) is driven continuously or clocked in one direction of rotation (270) by means of a drive device (260), and that the second roller (204) is simultaneously driven continuously or clocked in a direction of rotation (272) opposite to the direction of rotation (270) by means of the drive device (260).

14. Method according to claim 12 or 13, wherein the suction devices (210; 220) become inactive in a range of angular positions of the rollers (202; 204) in which the cover layer (304) is detached from the cover (102).

## Revendications

1. Dispositif (200) pour le détachement d'une couche de recouvrement (304) d'une feuille (300) à plusieurs couches montée au niveau d'une couverture (102) d'un document d'identité, de valeur ou de sécurité (100),
avec un premier rouleau (202) entraîné en continu ou en cadence de manière motorisée pour le transport d'une couverture (102) et un second rouleau (202) orienté par rapport au premier rouleau (202) de telle manière que la couverture (102) puisse passer à travers une fente réalisée au moins temporairement entre les deux rouleaux (202 ; 204),
dans lequel au niveau du premier rouleau (202) radialement par rapport à son axe longitudinal de rouleau (206) au moins un premier appareil d'aspiration (210) est agencé ou réalisé, lequel est relié en écoulement à un appareil de dépression et est configuré de manière à fixer la couverture (102) au moins partiellement au premier rouleau (202),
et dans lequel au niveau du second rouleau (204) radialement par rapport à son axe longitudinal de rouleau (206) au moins un second appareil d'aspiration (220) est agencé ou réalisé, lequel est relié en écoulement à l'appareil de dépression ou à un second appareil de dépression et est configuré de manière, lors de la mise en contact de la couche de recouvrement (304), à détacher celle-ci de la feuille (300) à plusieurs couches (300) de la couverture (102),
**caractérisé en ce que**
le premier appareil d'aspiration (210) est formé à partir d'une pluralité de premières ventouses (212) qui sont agencées de manière répartie sur une enveloppe du premier rouleau (202) et/ou **en ce que** le second appareil d'aspiration (220) est formé à partir d'une pluralité de secondes ventouses (222) qui sont agencées de manière répartie sur une enveloppe du second rouleau (204), et
**en ce qu'**une ou plusieurs des ventouses (212 ; 222) comprend un soufflet axialement comprimable qui est configuré de manière à exécuter, lors de l'aspiration ou de la mise en marche de l'appareil d'aspiration (210 ; 220), une course orientée radialement par rapport à l'axe longitudinal de rouleau (206) dans le sens inverse à la force de rappel.

2. Dispositif (200) selon la revendication 1, **caractérisé en ce que** la pluralité de premières ventouses (212) et/ou la pluralité de secondes ventouses (222) sont agencées dans une ou dans plusieurs rangées (214 ; 224) orientées parallèlement à l'axe longitudinal de rouleau (206 ; 208).

3. Dispositif (200) selon la revendication 1 ou 2, **caractérisé en ce que** la pluralité des premières ventouses (212) et/ou la pluralité des secondes ventouses (222) comprend au moins une ventouse médiane (216 ; 226) agencée de manière centrale ou au moins près du milieu de rouleau qui dépasse de la périphérie du rouleau concerné (202 ; 204).

4. Dispositif (200) selon l'une quelconque des revendications 1 à 3, **caractérisé en ce que** le premier appareil d'aspiration (210) et/ou le second appareil d'aspiration (220) est actif sur une plage angulaire entre 60 degrés et 180 degrés, de préférence entre 90 degrés et 120 degrés, et **en ce que** la plage angulaire est réalisée sur un côté du rouleau (202 ; 204) qui est tourné vers le rouleau (202 ; 204) qui lui est opposé.

5. Dispositif (200) selon l'une quelconque des revendications 1 à 4, **caractérisé en ce que** le premier appareil d'aspiration (210) et/ou le second appareil d'aspiration (220) comprend au moins un passage (232) réalisé dans une paroi de rouleau (240) du rouleau (202 ; 204), lequel est relié au moins temporairement à un volume d'aspiration (234) réalisé à l'intérieur du rouleau (202 ; 204), lequel est relié en écoulement à l'appareil de dépression et/ou au second appareil de dépression.

6. Dispositif (200) selon la revendication 5, **caractérisé en ce qu'**un élément de commande (250) est agencé à l'intérieur du rouleau (202 ; 204), lequel élément de commande bloque un ou plusieurs des passages (232) lorsque le rouleau (202 ; 204) est agencé sous une position angulaire prédéfinie ou à l'intérieur d'une plage prédéfinie de positions angulaires.

7. Dispositif (200) selon l'une quelconque des revendications 1 à 6, **caractérisé en ce qu'**un appareil d'entraînement (260) est présent, lequel est configuré afin d'entraîner le premier rouleau (202) en continu ou en cadence dans un sens de pivotement (270), et qui est configuré afin d'entraîner en même temps le second rouleau (204) en continu ou en cadence dans un sens de rotation (272) opposé au sens de pivotement (270).

8. Dispositif (200) selon l'une quelconque des revendications 1 à 7, **caractérisé en ce qu'**au moins une bande de transport (280) guidée autour d'un premier rouleau de déviation (284) est agencée au niveau du premier rouleau (202) pour le transport de la couverture (102) avec et sans la couche de recouvrement (304).

9. Dispositif (200) selon l'une quelconque des revendications 1 à 8, **caractérisé en ce qu'**au moins une bande de transport (280) guidée autour d'un second rouleau de déviation (284) est agencée au niveau du second rouleau (204) pour le transport de la couche de recouvrement (304) détachée.

10. Dispositif (200) selon l'une quelconque des revendications 1 à 9, **caractérisé en ce qu'**au premier rouleau (202) est associé un magasin d'alimentation (290) pour l'alimentation des couvertures (102), au niveau desquelles la feuille à plusieurs couches (300) comprenant la couche de recouvrement (304) est montée et **en ce que** le magasin d'alimentation (290) comprend un appareil de transport (292) pour le transport des couvertures (102) au premier rouleau (202).

11. Dispositif (200) selon l'une quelconque des revendications 1 à 10, **caractérisé en ce qu'**un magasin de collecte (294) est présent, lequel est configuré afin d'empiler et/ou de collecter les couvertures (102) sans couche de recouvrement pour la suite du traitement.

12. Procédé de détachement d'une couche de recouvrement (304) d'une feuille à plusieurs couches (300) qui est montée sur une couverture (102) d'un document d'identité, de valeur ou de sécurité (100), celui-ci comprenant les étapes consistant à :
- alimenter la couverture (102) au niveau d'un premier rouleau (202),
- fixer au moins partiellement un côté extérieur (130) éloigné de la couche de recouvrement (304) de la couverture (102) au premier rouleau (202) au moyen d'un premier appareil d'aspiration (210), orienté radialement par rapport à un axe longitudinal de rouleau (206), qui est formé à partir d'une pluralité de premières ventouses (212) qui sont agencées de manière répartie sur une enveloppe du premier rouleau (202), et qui comprennent un soufflet axialement comprimable qui est réglé lors de la fixation dans le sens inverse à une force de rappel,
- entraîner en continu ou en cadence le premier rouleau (202) autour de son axe longitudinal de rouleau (206), au moins jusqu'à ce que la couverture (102) soit transportée dans une fente au moins temporairement présente entre le premier rouleau (202) et un second rouleau (204),
- mettre en contact et fixer au moins partiellement la couche de recouvrement (304) au second rouleau (204) au moyen d'un appareil d'aspiration (220), orienté radialement par rapport à un axe longitudinal de rouleau (208), qui est formé à partir d'une pluralité de secondes ventouses (222) qui sont agencées de manière répartie sur une enveloppe du second rouleau (204), et qui comprennent un soufflet axialement comprimable qui est réglé lors de la fixation dans le sens inverse à une force de rappel, et
- détacher la couche de recouvrement (304) au moins partiellement fixée au second appareil d'aspiration (220) de la feuille à plusieurs couches (300) par un autre entraînement en continu ou en cadence du premier rouleau (202) autour de son axe longitudinal de rouleau (206).

13. Procédé selon la revendication 12, **caractérisé en ce que** le premier rouleau (202) est entraîné au moyen d'un appareil d'entraînement (260) en continu ou en cadence dans un sens de pivotement (270), et que le second rouleau (204) est entraîné en même temps en continu ou en cadence au moyen de l'appareil d'entraînement (260) dans un sens de rotation (272) opposé au sens de pivotement (270).

14. Procédé selon la revendication 12 ou 13, **caractérisé en ce que** les sens d'appareil d'aspiration (210 ; 220) sont inactifs dans une plage de positions angulaires des rouleaux (202 ; 204) dans laquelle la couche de recouvrement (304) est détachée de couverture (102).
